(19) Europäisches Patentamt
European Patent Office
Office européen des brevets

(11) **EP 4 435 892 A1**

(12) **EUROPEAN PATENT APPLICATION**

(43) Date of publication:
**25.09.2024 Bulletin 2024/39**

(21) Application number: **23204215.0**

(22) Date of filing: **17.10.2023**

(51) International Patent Classification (IPC):
**H01M 4/485** (2010.01)   **H01M 4/131** (2010.01)
**H01M 4/62** (2006.01)   **H01M 10/0525** (2010.01)
**H01M 50/209** (2021.01)   **H01M 10/627** (2014.01)

(52) Cooperative Patent Classification (CPC):
**H01M 4/485; H01M 4/131; H01M 4/622;**
**H01M 10/0525; H01M 10/627; H01M 50/209;**
H01M 2220/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.03.2023 JP 2023045835**

(71) Applicant: **Kabushiki Kaisha Toshiba**
**Tokyo 105-0023 (JP)**

(72) Inventors:
• **HOSHINA, Keigo**
**Tokyo, 105-0023 (JP)**
• **MURATA, Yoshiaki**
**Tokyo, 105-0023 (JP)**

(74) Representative: **Marks & Clerk LLP**
**15 Fetter Lane**
**London EC4A 1BW (GB)**

(54) **BATTERY, BATTERY PACK, VEHICLE, AND STATIONARY POWER SUPPLY**

(57)    In general, according to one approach, a battery (1) including a positive electrode (5), a negative electrode (3), and a water-containing electrolyte is provided. The negative electrode (3) includes a negative electrode active material-containing layer (3b) that includes a Ti-containing oxide and a binder capable of containing water. Also, the battery (1) satisfies the following expression (1):

$$0.2 \le W_{bind}/W_{H2O} \le 15 \quad (1)$$

where $W_{bind}$ denotes a content (% by weight) of the binder capable of containing water in the negative electrode active material-containing layer (3b), and $W_{H2O}$ denotes a content (% by weight) of the water in the electrolyte.

FIG. 1

EP 4 435 892 A1

**Description**

FIELD

Disclosure relate generally to a battery, a battery pack, a vehicle, and a stationary power supply.

BACKGROUND

Aqueous lithium secondary batteries having a negative electrode including a titanium composite oxide experience a change in the volume of the titanium composite oxide due to charge and discharge; thus, depletion of an electrolytic solution and breakage of an electron-conducting path are issues of concern. To prevent depletion of an electrolytic solution, reducing the electrode density is suggested. However, excessively reducing the electrode density in aqueous batteries such as aqueous lithium secondary batteries can easily cause electrolysis of water, resulting in degradation of the charge-and-discharge characteristics.

BRIEF DESCRIPTION OF THE DRAWINGS

FIG. 1 is a cross-sectional view schematically showing an example of a secondary battery according to an approach.
FIG. 2 is a schematic cross-sectional view of the secondary battery shown in FIG. 1 taken along line II-II.
FIG. 3 is a partially cut-out perspective view schematically showing another example of the secondary battery according to the approach.
FIG. 4 is an enlarged cross-sectional view of section E of the secondary battery shown in FIG. 3.
FIG. 5 is a perspective view schematically showing an example of a battery module according to an approach.
FIG. 6 is an exploded perspective view schematically showing an example of a battery pack according to an approach.
FIG. 7 is a block diagram showing an example of an electric circuit of the battery pack shown in FIG. 6.
FIG. 8 is a partial perspective view schematically showing an example of a vehicle according to an approach.
FIG. 9 is a block diagram showing an example of a system including a stationary power supply according to an approach.

DETAILED DESCRIPTION

In general, according to one approach, a battery including a positive electrode, a negative electrode, and a water-containing electrolyte is provided. The negative electrode includes a negative electrode active material-containing layer that includes a Ti-containing oxide and a binder capable of containing water. Also, the battery satisfies the following expression (1):

$$0.2 \leq W_{bind}/W_{H2O} \leq 15 \quad (1)$$

where $W_{bind}$ denotes a content (% by weight) of the binder capable of containing water in the negative electrode active material-containing layer, and $W_{H2O}$ denotes a content (% by weight) of the water in the electrolyte.
According to another approach, a battery pack including the battery of the approach is provided.
According to another approach, a vehicle including the battery pack of the approach is provided.
According to another approach, a stationary power supply including the battery pack of the approach is provided.

(First Approach)

According to a first approach, a battery including a positive electrode, a negative electrode, and a water-containing electrolyte is provided. The negative electrode includes a negative electrode active material-containing layer that includes a Ti-containing oxide and a binder capable of containing water. Also, the battery satisfies the following expression (1):

$$0.2 \leq W_{bind}/W_{H2O} \leq 15 \quad (1)$$

where $W_{bind}$ denotes a content (% by weight) of the binder capable of containing water in the negative electrode active material-containing layer, and $W_{H2O}$ denotes a content (% by weight) of the water in the electrolyte.

A battery including a water-containing electrolyte uses a binder that is soluble in an organic solvent, such as polyvinylidene fluoride (PVdF), in order to prevent the binder from being dissolved in the electrolyte. As a result of conducting intensive research, the inventors discovered that if the content of the binder capable of containing water in the negative electrode active material-containing layer and the content of the water in the electrolyte satisfy the relationship represented by the expression (1), generation of hydrogen gas due to the electrolysis of water can be suppressed, and the binder capable of containing water can also hold the electrolyte without being dissolved in the electrolyte, leading to improved adhesion between the active material-containing layer and the current collector and improved retention of the aqueous electrolyte in the active material-containing layer. Therefore, the battery of the approach can improve its own charge-and-discharge cycle performance.

The following is the explanation of the reason why the ratio $W_{bind}/W_{H2O}$ is set in the range represented by the above expression (1). By setting the ratio $W_{bind}/W_{H2O}$ to 0.2 or more, it is possible to appropriately reduce the weight of the water relative to the weight of the binder capable of containing water; thus, the binder capable of containing water is less likely to be dissolved in the electrolyte, and the adhesion between the active material-containing layer and the current collector can be maintained. Accordingly, degradation of the cycle performance can be suppressed. If the ratio $W_{bind}/W_{H2O}$ is 15 or less, the binder capable of containing water can be easily impregnated with the electrolyte. The ratio $W_{bind}/W_{H2O}$ is preferably in the range of 1 to 8.

Hereinafter, the negative electrode, the positive electrode, and the electrolyte will be described in detail.

<Negative Electrode>

The negative electrode includes a negative electrode current collector and a negative electrode active material-containing layer formed or stacked on either one of or both of the surfaces of the negative electrode current collector. The negative electrode active material-containing layer includes a negative electrode active material and a binder capable of containing water.

The negative electrode current collector may be made of, for example, a material that is electrochemically stable in the electric potential at which lithium (Li) is inserted into and extracted from the active material. Examples of the negative electrode current collector include: a conductive sheet that includes a conductive material and a polymeric material; a conductive sheet that includes at least one kind of metal element selected from the group consisting of Pb, Bi, Zn, Sb, and Sn; a foil made of a metal such as copper, nickel, stainless steel, or aluminum; and an aluminum alloy foil that includes one or more elements selected from Mg, Ti, Zn, Mn, Fe, Cu, and Si. Examples of the polymeric material of the conductive sheet that can be used include polyethylene, polypropylene, polyethylene terephthalate, polyacrylonitrile, polymethylmethacrylate, and polyvinylidene fluoride. A conductive filler such as a carbonaceous material is preferably used as the conductive material. Examples of the carbonaceous material that can be used include carbon black, ketjen black, graphite, fibrous carbon, and carbon nanotubes. One or more than one kind of conductive material and one or more than one kind of polymeric material may be used.

The thickness of the negative electrode current collector is preferably 5 $\mu$m to 50 um. A current collector having such a thickness can maintain a balance between the strength and the weight reduction of the electrode.

The negative electrode current collector may also include a portion that does not have the active material-containing layer formed on its surface. This portion can serve as a current-collecting tab or a current-collecting lead.

The negative electrode active material includes a Ti-containing oxide. The Ti-containing oxide is, for example, a Ti-containing oxide that can turn into a Ti-containing oxide that includes Li through a lithium-ion ($Li^+$) insertion-extraction reaction or a charge-discharge reaction. Thus, the Ti-containing oxide may be a Ti-containing oxide that does not include Li. The Ti-containing oxide that does not include Li is a Ti-containing oxide that does not include Li when the oxide is synthesized, or before a lithium-ion ($Li+$) insertion-extraction reaction occurs, or before a charge-discharge reaction occurs. Due to a lithium-ion insertion-extraction reaction or an irreversible reaction that occurs during a charge-discharge reaction, Li may remain in the Ti-containing oxide. Thus, the Ti-containing oxide that does not include Li includes the case where it includes substantially no Li.

Examples of the Ti-containing oxide include niobium titanium-containing oxides and titanium oxides. These oxides do not include Li when the oxides are synthesized, or before a lithium-ion insertion-extraction reaction occurs, or before a charge-discharge reaction occurs; however, they can turn into a Ti-containing oxide that includes Li through a lithium-ion insertion-extraction reaction or a charge-discharge reaction. Since the lithium-ion insertion-extraction reaction of the niobium titanium-containing oxides is a solid solution reaction, there is a range in the operating potential of the negative electrode that includes a niobium titanium-containing oxide. For example, the operating potential of the negative electrode that includes a niobium titanium-containing oxide that includes a crystal phase represented by $TiNb_2O_7$ ranges from about 1.7 V to about 0.7 V. Because of this, the negative electrode that includes a niobium titanium-containing oxide can set the negative electrode potential to a potential at which a film (or covering) is easily formed, thus promoting formation of a film (or covering) such as a nitrogen-containing compound on the negative electrode active material. On the other hand, spinel-type lithium titanium oxides such as $Li_4Ti_5O_{12}$ have a composition that includes Li when the oxides are synthesized, in other words, before a lithium-ion insertion-extraction reaction occurs. The operating potential of the negative electrode that includes a spinel-type lithium titanium oxide is constant at 1.55 V. Thus, it is difficult to set the potential of the negative electrode that includes a spinel-type lithium titanium oxide to a potential that is advantageous in forming a film (or covering) such as a nitrogen-containing compound, likely preventing uniform formation of a film (or covering) on the negative electrode active material.

If at least one of a niobium titanium-containing oxide or a titanium oxide is used as the negative electrode active material, a high electromotive force can be obtained by the combined use with a lithium manganese composite oxide or a lithium nickel cobalt manganese composite oxide that is a positive electrode active material.

Examples of the niobium titanium-containing oxide include those that include at least one crystal phase selected from the group consisting of $TiNb_2O_7$, $Ti_2Nb_2O_9$, $Ti_2Nb_{10}O_{29}$, $TiNb_{14}O_{37}$, and $TiNb_{24}O_{62}$. The niobium titanium-containing oxides may be substituted niobium titanium composite oxides in which at least a part of Nb and/or Ti has been substituted by an element other than Nb and Ti. Examples of the substituting element include Na, K, Ca, Co, Ni, Si, P, V, Cr, Mo, Ta, Zr, Mn, Fe, Mg, B, Pb, and Al. The substituted niobium titanium composite oxides may include one or more than one kind of substituting element. The active material particles may include one or more than one kind of niobium titanium-containing oxide. The niobium titanium-containing oxides preferably include $Nb_2TiO_7$ having a monoclinic structure. In this case, an electrode having an excellent capacity and excellent rate performance can be obtained.

An example of the monoclinic niobium titanium-containing oxides is compounds represented by $Li_xTi_{1-y}M1_yNb_{2-z}M2_zO_{7+\delta}$. Here, M1 is at least one selected from the group consisting of Zr, Si, and Sn, and M2 is at least one selected from the group consisting of V, Ta, and Bi. The respective subscripts in the composition formula are specified as follows: $0 \leq x \leq 5$, $0 \leq y < 1$, $0 \leq z < 2$, and $-0.3 \leq \delta \leq 0.3$.

Another example of the monoclinic niobium titanium-containing oxides is compounds represented by $Ti_{1-y}M3_{y+z}Nb_{2-z}O_{7-\delta}$. Here, M3 is at least one selected from Mg, Fe, Ni, Co, W, Ta, and Mo. The respective subscripts in the composition formula are specified as follows: $0 \leq y < 1$, $0 \leq z < 2$, and $-0.3 \leq \delta \leq 0.3$.

Another example of the monoclinic niobium titanium-containing oxides is those represented by $Li_aTiM_bNb_{2\pm\beta}O_{7\pm\sigma}$ ($0 \leq a \leq 5$, $0 \leq b \leq 0.3$, $0 \leq \beta \leq 0.3$, $0 \leq \sigma \leq 0.3$, and M is at least one kind of element selected from the group consisting of Fe, V, Mo and Ta).

The titanium oxides include, for example, a titanium oxide having a monoclinic structure, a titanium oxide having a rutile structure, and a titanium oxide having an anatase structure. The composition of the titanium oxides having these crystal structures before charging can be represented by $TiO_2$, and the composition thereof after charging can be represented by $Li_xTiO_2$ (x is $0 \leq x \leq 1$). The structure of the titanium oxide having a monoclinic structure before charging can be represented by $TiO_z(B)$.

One or more than one kind of negative electrode active material may be used.

The negative electrode active material is contained in the negative electrode active material-containing layer in the form of, for example, particles. The negative electrode active material particles may be primary particles, secondary particles as an aggregate of primary particles, or a mixture of discrete primary particles and secondary particles. The shape of the particles is not particularly limited, and may be a spherical shape, an elliptical shape, a flat shape, a fibrous form, or the like.

The average particle size (diameter) of the primary particles of the negative electrode active material is preferably 3 $\mu$m or less, and more preferably 0.01 $\mu$m to 1 $\mu$m. The average particle size (diameter) of the secondary particles of the negative electrode active material is preferably 30 $\mu$m or less, and more preferably 5 $\mu$m to 20 um.

The binder capable of containing water only needs to be able to include water, and may or may not actually include water. Examples of the binder capable of containing water include a water-soluble binder and a hydrophilic binder. Examples of the binder capable of containing water include carboxymethyl cellulose (CMC), styrene-butadiene rubber (SBR), polyvinyl pyrrolidone (PVP), and salts of CMC (such as a sodium salt of CMC or a potassium salt of CMC). One or more than one kind of binder capable of containing water may be used. CMC and salts of CMC can enhance the viscosity of a slurry of the negative electrode. On the other hand, SBR functions to reduce the viscosity if it contains water. The viscosity of the negative electrode slurry can be easily adjusted to a target range by using at least one of CMC or a salt of CMC together with SBR.

$W_{bind}$ can be set to 0.8% by weight to 6% by weight. With $W_{bind}$ set in this range, the binder capable of containing water can easily hold the electrolyte without being dissolved in the electrolyte, leading to further improved charge-and-discharge cycle performance. $W_{bind}$ is more preferably in a range of 2% by weight to 6% by weight.

The negative electrode active material-containing layer may include a conductive agent and the like in addition to the negative electrode active material and the binder. The conductive agent is added, as necessary, to enhance current collecting performance and to suppress a contact resistance between the active material and the current collector.

Examples of the conductive agent include carbonaceous materials such as acetylene black, Ketjen black, graphite, or coke. A single kind of conductive agent, or a mixture of two or more kinds of conductive agents may be used.

The blending ratio of the negative electrode active material and the conductive agent in the negative electrode active material-containing layer can be changed, as appropriate. For example, the content of the negative electrode active material in the negative electrode active material-containing layer can be set to 68% by weight to 96% by weight. On the other hand, the content of the conductive agent in the negative electrode active material-containing layer can be set to 2% by weight to 30% by weight. Setting the amount of the conductive agent to 2% by weight or more can improve the current-collecting performance of the negative electrode active material-containing layer. Also, the content of the conductive agent is preferably 30% by weight or less in view of increasing the capacity.

A nitrogen-containing compound may be present on at least a part of a surface of the negative electrode active material-containing layer. The nitrogen-containing compound is a compound containing a nitrogen atom (N). The nitrogen-containing compound can contribute to suppression of the electrolysis of water. The surface portion on which the nitrogen-containing compound is present is not particularly limited, and may be a portion facing the positive electrode via a separator on the surface of the negative electrode active material-containing layer that is not in contact with the negative electrode current collector. An example of this portion is a main surface of the negative electrode active material-containing layer forming the surface of the negative electrode. Examples of the nitrogen-containing compound include a compound having a functional group containing a nitrogen atom (N). Examples of the functional group containing a nitrogen atom (N) include an amide bond. Thus, a compound including an amide bond may be present on at least a part of the surface of the negative electrode active material-containing layer. Examples of the compound including an amide bond include urea, N-methylurea, N,N'-dimethylpropyleneurea, acetamide, and thioacetamide. One or more than one kind of compound including an amide bond may be used.

The negative electrode can be produced, for example, by the following method. First, the negative electrode active material, the conductive agent, and the binder capable of containing water are suspended in a water solvent to prepare a slurry. The slurry is applied to either one or both surfaces of the current collector. The applied slurry is then dried to obtain a stack of the active material-containing layer and the current collector. Thereafter, the stack is pressed. The negative electrode is thus produced.

<Positive Electrode>

The positive electrode includes a positive electrode current collector and a positive electrode active material-containing layer formed or stacked on either one of or both of the surfaces of the positive electrode current collector. The positive electrode active material-containing layer includes a positive electrode active material. The positive electrode active material-containing layer may further include a conductive agent and a binder (positive electrode binder). The conductive agent is added, as necessary, to enhance current collecting performance and to suppress a contact resistance between the active material and the current collector. The binder functions to bind the active material, the conductive agent, and the current collector.

The positive electrode current collector may be made of, for example, a material that is electrochemically stable in the electric potential at which lithium (Li) is inserted into and extracted from the active material. Examples of the positive electrode current collector include: a conductive sheet that includes a conductive material and a polymeric material; a conductive sheet that includes at least one kind of metal element selected from the group consisting of Pb, Bi, Zn, Sb, and Sn; a foil made of a metal such as nickel, stainless steel, or aluminum; and an aluminum alloy foil that includes one or more elements selected from Mg, Ti, Zn, Mn, Fe, Cu, and Si. Examples of the polymeric material and the conductive material of the conductive sheet may be those described for the negative electrode current collector.

The thickness of the positive electrode current collector is preferably 5 $\mu$m to 50 um. A current collector having such a thickness can maintain a balance between the strength and the weight reduction of the electrode.

The positive electrode current collector may also include a portion that does not have the active material-containing layer formed on its surface. This portion can serve as a current-collecting tab or a current-collecting lead.

A compound having a lithium ion insertion/extraction potential of 3 V (vs.Li/Li$^+$) to 5.5 V (vs.Li/Li$^+$) as a potential based on metal lithium, can be used as the positive electrode active material. The positive electrode may contain one kind of positive electrode active material or two or more kinds of positive electrode active materials.

Examples of the positive electrode active material include a lithium manganese composite oxide, a lithium nickel composite oxide, a lithium cobalt aluminum composite oxide, a lithium nickel cobalt manganese composite oxide, a spinel-type lithium manganese nickel composite oxide, a lithium manganese cobalt composite oxide, a lithium iron oxide, a lithium fluorinated iron sulfate, and a phosphate compound having an olivine crystal structure (e.g., $Li_xFePO_4$ (0 < x ≤ 1), $Li_xMnPO_4$ (0 < x ≤ 1)). The phosphate compound having an olivine crystal structure has excellent thermal stability.

Examples of the positive electrode active material that allows for obtainment of a high positive electrode potential include: lithium nickel cobalt manganese composite oxides ($Li_xNi_{1-y-z}CO_yMn_zO_2$; 0 < x ≤ 1, 0 < y < 1, 0 < z < 1, y+z < 1); lithium manganese composite oxides such as $Li_xMn_2O_4$ (0 < x ≤ 1) having a spinel structure or $Li_xMnO_2$ (0 < x ≤ 1) having a spinel structure; lithium nickel aluminum composite oxides such as $Li_xNi_{1-y}Al_yO_2$ (0 < x ≤ 1, 0 < y < 1); lithium cobalt composite oxides such as $Li_xCoO_2$ (0 < x ≤ 1); lithium nickel cobalt composite oxides such as $Li_xNi_{1-y-z}Co_yMn_zO_2$

(0 < x ≤ 1, 0 < y < 1, 0 ≤ z < 1); lithium manganese cobalt composite oxides such as $Li_xMn_yCo_{1-y}O_2$ (0 < x ≤ 1, 0 < y < 1) ; spinel-type lithium manganese nickel composite oxides such as $Li_xMn_{1-y}Ni_yO_4$ (0 < x ≤ 1, 0 < y < 2, 0 < 1-y < 1) ; lithium phosphorus oxides having an olivine structure such as $Li_xFePO_4$ (0 < x ≤ 1), $Li_xFe_{1-y}Mn_yPO_4$ (0 < x ≤ 1, 0 ≤ y ≤ 1), $Li_xCoPO_4$ (0 < x ≤ 1); and fluorinated ferrous sulfates (e.g., $Li_xFeSO_4F$ (0 < x ≤ 1)).

The positive electrode active material is included in the positive electrode in the form of particles, for example. The positive electrode active material particles may be discrete primary particles, secondary particles as an agglomerate of primary particles, or a mixture of primary particles and secondary particles. The shape of the particles is not particularly limited, and may be a spherical shape, an elliptical shape, a flat shape, a fibrous form, or the like.

The average particle size (diameter) of the primary particles of the positive electrode active material is preferably 10 um or less, and more preferably 0.1 $\mu$m to 5 $\mu$m. The average particle size (diameter) of the secondary particles of the positive electrode active material is preferably 100 $\mu$m or less, and more preferably 10 $\mu$m to 50 um.

The binder is added to fill gaps among the dispersed positive electrode active material and also to bind the positive electrode active material with the positive current collector. Examples of the binder include polytetrafluoro ethylene (PTFE), polyvinylidene fluoride (PVdF), fluororubber, a polyacrylic acid compound, an imide compound, carboxymethyl cellulose (CMC), and salts of CMC. One of these may be used as the binder, or alternatively, two or more of these may be used in combination as the binder.

The conductive agent is added to enhance the current-collecting performance and to suppress a contact resistance between the positive electrode active material and the positive electrode current collector. Examples of the conductive agent include carbonaceous materials such as vapor grown carbon fiber (VGCF), carbon black such as acetylene black, and graphite. One of these may be used as the conductive agent, or alternatively, two or more of these may be used in combination as the conductive agent. The conductive agent may be omitted.

In the positive electrode active material-containing layer, the positive electrode active material and the binder are preferably blended at a ratio of 80% by weight to 98% by weight, and 2% by weight to 20% by weight, respectively.

Setting the amount of the binder to 2% by weight or more can yield sufficient electrode strength. The binder can serve as an insulator. Thus, setting the amount of the binder to 20% by weight or less reduces the amount of an insulator included in the electrode and thus can decrease the internal resistance.

If a conductive agent is to be added, the positive electrode active material, the binder, and the conductive agent are preferably blended at a ratio of 77% by weight to 95% by weight, 2% by weight to 20% by weight, and 3% by weight to 15% by weight, respectively.

Setting the amount of the conductive agent to 3% by weight or more can produce the above-described effects. Setting the amount of the conductive agent to 15% by weight or less can decrease the proportion of the conductive agent that contacts the electrolyte. If said proportion is low, decomposition of the electrolyte can be reduced during storage under high temperature.

To produce the positive electrode, for example, the positive electrode active material, the conductive agent, and the binder are suspended in a solvent to prepare a slurry. The slurry is applied to either one or both surfaces of the current collector. The applied slurry is then dried to obtain a stack of the active material-containing layer and the current collector. Thereafter, the stack is pressed. The positive electrode is thus produced. Alternatively, the positive electrode may be produced by the following method. First, the active material, the conductive agent, and the binder are mixed to obtain a mixture. Next, the mixture is formed into pellets. These pellets are then arranged on the current collector, whereby the positive electrode can be obtained.

<Aqueous Electrolyte>

The electrolyte includes water. Hereinafter, the electrolyte including water may be referred to as an aqueous electrolyte.

The aqueous electrolyte includes an aqueous solvent and an electrolyte salt dissolved in an aqueous solvent. The aqueous electrolyte may be liquid or gelatinous. A liquid aqueous electrolyte is, for example, an aqueous solution prepared by dissolving an electrolyte salt as a solute in an aqueous solvent. A gelatinous aqueous electrolyte is, for example, prepared by mixing a liquid aqueous electrolyte and a polymeric compound to form a composite thereof. Examples of the polymeric compound include polyvinylidene fluoride (PVdF), polyacrylonitrile (PAN), and polyethylene oxide (PEO). When the aqueous electrolyte is held in both the negative electrode active material-containing layer and the positive electrode active material-containing layer, the type of the aqueous electrolyte held in the negative electrode active material-containing layer may be the same or different from the type of the aqueous electrolyte held in the positive electrode active material-containing layer.

A solution containing water can be used as the aqueous solvent. The solution containing water may be pure water or a mixed solvent of water and an organic solvent. For example, the aqueous solvent contains water in a proportion of 50% by volume or more.

$W_{H2O}$ can be 10% by weight or less. Setting $W_{H2O}$ in this range can suppress the electrolysis of water, leading to further improved charge-and-discharge cycle performance. The lower limit of $W_{H2O}$ can be 0.3% by weight. That is, $W_{H2O}$ can be 0.3% by weight to 10% by weight.

For example, a lithium salt, a sodium salt, or a mixture thereof can be used as an electrolyte salt. One or more than one kind of electrolyte salt may be used.

The content of the electrolyte salt in the aqueous electrolyte can be in a range of 45% by weight to 65% by weight, and more preferably in a range of 50% by weight to 60% by weight.

For example, lithium chloride (LiCl), lithium bromide (LiBr), lithium hydroxide (LiOH), lithium sulfate ($Li_2SO_4$), lithium nitrate ($LiNO_3$), lithium acetate ($CH_3COOLi$), lithium oxalate ($Li_2C_2O_4$), lithium carbonate ($Li_2CO_3$), lithium difluoro (oxalato)borate (LiDFOB, $C_2BF_2LiO_4$), lithium bis(trifluoro methanesulfonyl)imide (LiTFSI; $LiN(CF_3SO_2)_2$), lithium bis(fluorosulfonyl) imide (LiFSI; $LiN(FSO_2)_2$), lithium bis(pentafluoro ethanesulfonyl)imide (LiBETI; $LiN(SO_2C_2F_5)_2$), and lithium bisoxalateborate (LiBOB:$LiB[(OCO)_2]_2$) can be used as the lithium salt.

At least one selected from the group consisting of $LiN(FSO_2)_2$, $LiN(CF_3SO_2)_2$, and $LiN(SO_2C_2F_5)_2$ is preferably included as the lithium salt. Each lithium salt is a solid at a temperature around room temperature, but can turn into a liquid with a compound including an amide bond through a eutectic reaction. Thus, it can contribute to reduction of the water content $W_{H2O}$ in the aqueous electrolyte. Lithium salts including LiTFSI; $LiN(CF_3SO_2)_2$) are preferred.

For example, sodium chloride (NaCl), sodium sulfate ($Na_2SO_4$), sodium hydroxide (NaOH), sodium nitrate ($NaNO_3$), and sodium trifluoromethanesulfonylamide (NaTFSA) can be used as the sodium salt.

The aqueous electrolyte can include, as an anion species, at least one selected from chlorine ions ($Cl^-$), hydroxide ions ($OH^-$), sulfate ions ($SO_4^{2-}$), and nitrate ions ($NO_3^-$).

The aqueous electrolyte may include a compound including an amide bond. This allows the binder capable of containing water to cover the surfaces of the negative electrode active material particles in the state of including the aqueous electrolyte without being dissolved in the aqueous electrolyte. As a result, even if a change in the volume of the negative electrode due to charge and discharge occurs, depletion of the aqueous electrolyte can be prevented, leading to improved charge-and-discharge characteristics. The compound including an amide bond can form a liquid mixture with a lithium salt consisting of at least one selected from the group consisting of LiTFSI, LiFSI, and LiBETI through a eutectic reaction. Thus, the aqueous electrolyte which includes a compound including an amide bond and a lithium salt consisting of at least one selected from the group consisting of LiTFSI, LiFSI, and LiBETI can have a desired lithium ion concentration even if the amount of the aqueous solvent is small. Accordingly, it is possible to suppress the electrolysis of water without degrading the ionic conductivity of the aqueous electrolyte.

Examples of the compound including an amide bond include urea, N-methylurea, N,N'-dimethylpropyleneurea, acetamide, and thioacetamide. One or more than one kind of compound including an amide bond may be used.

The content of the compound including an amide bond in the aqueous electrolyte can be in a range of 30% by weight to 55% by weight, preferably in a range of 30% by weight to 45% by weight. If the aqueous electrolyte contains a small amount of the compound including an amide bond, a film (or covering) may not be formed on the surfaces of the negative electrode active material particles. Also, a part of the lithium salt in the form of a solid may be precipitated in the solvent as is. On the other hand, if the aqueous electrolyte contains a large amount of the compound including an amide bond, a film (or covering) may be excessively formed on the surfaces of the negative electrode active material particles, resulting in an increased resistance of the negative electrode.

The aqueous electrolyte may include potassium hydroxide (KOH). Potassium hydroxide may function as a catalyst of a reaction of forming a film (or covering) on the surfaces of the negative electrode active material particles. Thus, when the aqueous electrolyte contains potassium hydroxide and a compound including an amide bond, formation of a film (or covering) on the surfaces of the negative electrode active material particles can be promoted.

The pH of the aqueous electrolyte is preferably 3 to 14, and more preferably 4 to 13. If different electrolytes are used for the electrolyte on the negative electrode side and the electrolyte on the positive electrode side, the pH of the electrolyte on the negative electrode side is preferably in a range of 3 to 14, and the pH of the electrolyte on the positive electrode side is preferably in a range of 1 to 8.

With the pH of the electrolyte on the negative electrode side in the above range, the potential for generating hydrogen in the negative electrode is decreased, leading to suppression of hydrogen generation in the negative electrode. Thus, the storage performance and the cycle life performance of the battery are improved. With the pH of the electrolyte on the positive electrode side in the above range, the potential for generating oxygen in the positive electrode is increased, resulting in reduction of oxygen generation in the positive electrode. Thus, the storage performance and the cycle life performance of the battery are improved. The pH of the electrolyte on the positive electrode side is more preferably in the range of 3 to 7.5.

The aqueous electrolyte may include a surfactant. Examples of the surfactant include non-ionic surfactants such as polyoxyalkylene alkyl ether, polyethylene glycol, polyvinyl alcohol, thiourea, 3,3'-dithiobis(1-propane phosphonic acid)2 sodium, dimercaptothiadiazole, boric acid, oxalic acid, malonic acid, saccharin, sodium naphthalenesulfonate, gelatin, potassium nitrate, aromatic aldehyde, or heterocyclic aldehyde. The surfactant may be used in a single form or in the form of a mixture of two or more kinds thereof.

The battery of the approach may further include at least one of a separator or a container member.

<Separator>

The separator is disposed, for example, between the positive electrode and the negative electrode. The separator may include one that covers only one of the positive electrode or the negative electrode.

The separator may have a porous structure. Examples of the porous separator include a non-woven fabric, a film, and paper. Examples of the component of the porous separator that forms a non-woven fabric, a film, paper, and the like include polyolefins, such as polyethylene or polypropylene, and cellulose. Preferred examples of the porous separator include non-woven fabrics including cellulose fibers and porous films including polyolefin fibers.

The porous separator preferably has a porosity of 60% or more. The porous separator also preferably has a fiber diameter of 10 um or less. With a fiber diameter of 10 um or less, the compatibility of the porous separator to the electrolyte is improved, allowing for a decrease in the battery resistance. A more preferred range of fiber diameter is 3 $\mu$m or less. A cellulose fiber-containing non-woven fabric having a porosity of 60% or more exhibits favorable impregnation performance for an electrolyte, and can exhibit high output performance ranging from a low temperature to a high temperature. A more preferred range of porosity is 62% to 80%.

The porous separator preferably has a thickness of 20 $\mu$m to 100 $\mu$m, and preferably has a density of 0.2 g/cm$^3$ to 0.9 g/cm$^3$. In these ranges, it is possible to maintain a balance between a mechanical strength and reduction of a battery resistance, and to provide a high-output secondary battery with an internal short-circuit suppressed. Also, heat shrinkage of the separator is less likely to occur in a high-temperature environment, allowing for attainment of favorable high-temperature storage performance.

A composite separator that includes a porous separator and a layer formed on one side or both sides of the porous separator and containing inorganic particles may be used as the separator. Examples of the inorganic particles include aluminum oxide and silicon oxide.

A solid electrolyte layer may be used as the separator. The solid electrolyte layer may include solid electrolyte particles and a polymeric component. The solid electrolyte layer may be made only of solid electrolyte particles. The solid electrolyte layer may include one kind of solid electrolyte particles or more than one kind of solid electrolyte particles. The solid electrolyte layer may include at least one selected from the group consisting of a plasticizer and an electrolyte salt. For example, if the solid electrolyte layer includes an electrolyte salt, the alkali metal ion conductivity of the solid electrolyte layer can be further enhanced. The polymeric material may be in a granular form or a fibrous form.

The solid electrolyte layer is preferably sheet-shaped with few or no pinhole-like pores. The thickness of the solid electrolyte layer is not particularly limited, but is, for example, 150 $\mu$m or less, and preferably 20 $\mu$m to 50 $\mu$m.

The polymeric component used in the solid electrolyte layer is preferably a polymeric component insoluble in an aqueous solvent. Examples of a polymeric component satisfying this condition include polyethylene terephthalate (PET), polypropylene (PP), polyethylene (PE), and a fluorine-containing polymeric component. By using a fluorine-containing polymeric component, the separator can have water-repellent properties. Also, an inorganic solid electrolyte has high stability against water and has excellent lithium ion conductivity. Combining an inorganic solid electrolyte having lithium ion conductivity and a fluorine-containing polymeric component to form a composite can realize a solid electrolyte layer with alkali metal ion conductivity and flexibility. The separator made of said solid electrolyte layer can reduce resistance, and thus can improve the large-current performance of the secondary battery.

Examples of the fluorine-containing polymeric component include polytetrafluoro-ethylene (PTFE), polychlorotrifluoroethylene (PCTFE), ethylene-tetrafluoroethylene copolymer, and polyvinylidene fluoride (PVdF). One or more than one kind of fluorine-containing polymeric component may be used.

If the solid electrolyte layer contains a polymeric component, a proportion of the polymeric component contained in the solid electrolyte layer is preferably 1% by weight to 20% by weight. In this range, a high mechanical strength can be achieved when the solid electrolyte layer has a thickness of 10 um to 100 um, and the resistance can be reduced. Furthermore, there is a low possibility that the solid electrolyte will be a factor of inhibiting lithium ion conductivity. A more preferred range of the proportion is 3% by weight to 10% by weight.

An inorganic solid electrolyte is preferably used as the solid electrolyte. The inorganic solid electrolyte is a solid substance having Li-ion conductivity. Herein, having Li-ion conductivity means showing a lithium ion conductivity of 1 $\times$ 10$^{-6}$ S/cm or more at 25 °C. An inorganic solid electrolyte is, for example, an oxide-based solid electrolyte or a sulfide-based solid electrolyte. Specific examples of the inorganic solid electrolyte are described below.

A lithium phosphate solid electrolyte having a NASICON (sodium (Na) super ionic conductor)-type structure and represented by a general formula Li$_{1+x}$M$\alpha_2$ (PO$_4$)$_3$ is preferably used as the oxide-based solid electrolyte. M$\alpha$ in the above general formula is, for example, at least one selected from the group consisting of titanium (Ti), germanium (Ge), strontium (Sr), zirconium (Zr), tin (Sn), aluminum (Al), and calcium (Ca). The subscript x in the above general formula is in a range of $0 \leq x \leq 2$.

Specific examples of the lithium phosphate solid electrolyte having a NASICON-type structure include: LATP

compounds represented by $Li_{1+x}Al_xTi_{2-x}(PO_4)_3$, where $0.1 \leq x \leq 0.5$; compounds represented by $Li_{1+x}Al_yM\beta_{2-y}(PO_4)_3$, where $M\beta$ is at least one selected from the group consisting of Ti, Ge, Sr, Zr, Sn, and Ca, and $0 \leq x \leq 1$ and $0 \leq y \leq 1$; compounds represented by $Li_{1+x}Al_xGe_{2-x}(PO_4)_3$, where $0 \leq x \leq 2$; compounds represented by $Li_{1+x}Al_xZr_{2-x}(PO_4)_3$, where $0 \leq x \leq 2$; compounds represented by $Li_{1+x+y}Al_xM\gamma_{2-x}Si_yP_{3-y}O_{12}$, where $M\gamma$ is at least one selected from the group consisting of Ti and Ge, and $0 < x \leq 2$, $0 \leq y < 3$; and compounds represented by $Li_{1+2x}Zr_{1-x}Ca_x(PO_4)_3$, where $0 \leq x < 1$.

Examples of the oxide-based solid electrolyte also include the following in addition to the above lithium phosphate solid electrolytes: amorphous LIPON compounds represented by $Li_xPO_yN_z$, where $2.6 \leq x \leq 3.5$, $1.9 \leq y \leq 3.8$, and $0.1 \leq z \leq 1.3$ (e.g., $Li_{2.9}PO_{3.3}N_{0.45}$); compounds having a garnet structure and represented by $La_{5+x}A_xLa_{3-x}M\delta_2O_{12}$, where A is at least one selected from the group consisting of Ca, Sr, and Ba, $M\delta$ is at least one selected from the group consisting of Nb and Ta, and $0 \leq x \leq 0.5$; compounds represented by $Li_3M\delta_{2-x}L_2O_{12}$, where $M\delta$ is at least one selected from the group consisting of Nb and Ta, L may include Zr, and $0 \leq x \leq 0.5$; compounds represented by $Li_{7-3x}Al_xLa_3Zr_3O_{12}$, where $0 \leq x \leq 0.5$; LLZ compounds represented by $Li_{5+x}La_3M\delta_{2-x}Zr_xO_{12}$, where $M\delta$ is at least one selected from the group consisting of Nb and Ta, and $0 \leq x \leq 2$ (e.g., $Li_7La_3Zr_2O_{12}$); and compounds having a perovskite structure and represented by $La_{2/3-x}Li_xTiO_3$, where $0.3 \leq x \leq 0.7$.

One or more of the above compounds may be used as the solid electrolyte. Two or more of the above solid electrolytes may be used.

<Container Member>

The container member houses at least the positive electrode, the negative electrode, the separator, and the aqueous electrolyte. As the container member, a metallic container, a container made of a laminated film, or a container made of resin, for example, may be used. As the metallic container, a metal can made of nickel, iron, stainless steel and the like and having a prismatic and cylindrical shape may be used. As the container made of resin, a container made of polyethylene, polypropylene or the like may be used.

The thickness of the laminated film is, for example, 0.5 mm or less, and preferably 0.2 mm or less.

As the laminated film, a multilayer film including multiple resin layers and a metal layer interposed between the resin layers is used. The resin layer includes, for example, a polymeric material such as polypropylene (PP), polyethylene (PE), nylon, or polyethylene terephthalate (PET). The metal layer is preferably made of an aluminum foil or an aluminum alloy foil for reduction in weight. The laminated film may be formed into the shape of the container member by heat-sealing.

The wall thickness of the metallic container is, for example, 1 mm or less, more preferably 0.5 mm or less, and still more preferably 0.2 mm or less.

The metallic container is made, for example, of aluminum, an aluminum alloy or the like. The aluminum alloy preferably contains an element(s) such as magnesium, zinc, silicon, and the like. If the aluminum alloy contains a transition metal such as iron, copper, nickel, or chromium, the content thereof is preferably 100 ppm by weight or less.

The shape of the container member is not particularly limited. The shape of the container member may be, for example, flat (thin), prismatic, cylindrical, coin-shaped, button-shaped, or the like. The container member can be suitably selected depending on the size of the battery or the use of the battery.

The secondary battery according to the approach may be used in various shapes such as a prismatic shape, a cylindrical shape, a flat shape, a thin shape, or a coin shape. The secondary battery may be a secondary battery having a bipolar structure. For example, the secondary battery may be one that has a bipolar structure in which the electrode group has a positive electrode active material-containing layer on one side of a single current collector and a negative electrode active material-containing layer on the other side of the current collector. In this case, there is an advantage in that a plurality of cells in series can be formed of a single cell.

Hereinafter, methods of checking the positive electrode active material, the negative electrode active material, the binder of the negative electrode, and the aqueous electrolyte will be described below.

If the positive electrode and the negative electrode are included in the battery, the battery is disassembled to remove the positive electrode or the negative electrode, which is then washed using dimethyl carbonate (DMC). The washing method will be described below. The electrode (positive electrode or negative electrode) is immersed in DMC for five minutes, and then removed therefrom. This is repeated three times, and then the electrode is dried, followed by the measurement. When repeating the immersion, new DMC is used every time the immersion is carried out.

In the case of removing the aqueous electrolyte from the battery, the battery is disassembled, and if the aqueous electrolyte is included outside the electrode, the aqueous electrolyte not immersed in the electrode is extracted. If the aqueous electrolyte cannot be extracted from outside the electrode, the electrode group is put in a centrifugal separator to extract the aqueous electrolyte through centrifugation.

<Positive Electrode Active Material>

The crystal structure and the elemental composition of the positive electrode active material can be ascertained by powder X-ray diffraction (XRD) measurement and inductively coupled plasma (ICP) emission spectroscopy.

<Negative Electrode Active Material>

The crystal structure and the elemental composition of the negative electrode active material can be ascertained by powder X-ray diffraction (XRD) measurement and inductively coupled plasma (ICP) emission spectroscopy.

<Binder of Negative Electrode>

The composition of the binder included in the negative electrode can be ascertained by gas chromatography-mass spectrometry (GC-MS) measurement.

$W_{bind}$ is measured by the following method. The battery is disassembled, and the negative electrode is extracted. Thereafter, a part of the negative electrode is cut to obtain a sample piece. The sample piece has, for example, a square plate-shape with a side length of 2 cm. The sample piece is washed in advance using, for example, dimethyl carbonate (DMC), and then subjected to vacuum drying at 80 °C. After the drying, an active material-containing layer is removed from the current collector of the sample piece, and thermal gravimetric analysis (TG) is performed. The amount of the reduction of the weight up to 600 °C is regarded as the weight of the binder. The ratio (% by weight) of the weight of the binder to the weight of the active material-containing layer included in the sample piece is calculated from the weight of the binder obtained and the weight of the active material-containing layer of the sample piece, whereby $W_{bind}$ is obtained.

<XPS Analysis>

The presence or absence of the nitrogen-containing compound on the surface of the negative electrode can be ascertained by XPS analysis under the conditions described below.

Quantera SXM manufactured by ULVAC-PHI, Inc. or an apparatus having equivalent functions can be used as an XPS apparatus. A single-crystal spectroscopic Al K-$\alpha$ ray (1486.6 eV) is used as an excitation X-ray source. X-ray output is 4 kW (13 kV $\times$ 310 mA), a photoelectron detection angle is 45°, and an analysis region is about 4 mm $\times$ 0.2 mm. Scanning is performed at 0.10 eV/step.

<Aqueous Electrolyte>

The inclusion of water in the aqueous electrolyte can be ascertained by gas chromatography-mass spectrometry (GC-MS) measurement. Also, the water content $W_{H2O}$ in the aqueous electrolyte can be measured by, for example, evaporating the water in the aqueous electrolyte and using a weight ratio between the aqueous electrolyte and the residue. A defined amount of the aqueous electrolyte is obtained and evaporated in an inert atmosphere. The water content $W_{H2O}$ can be calculated based on the weight ratio between the aqueous electrolyte and the residue.

The inclusion of the compound having an amide bond in the aqueous electrolyte can be ascertained as follows. First, whether the aqueous electrolyte has a nitrogen-containing compound or not is ascertained using inductively coupled plasma (ICP) emission spectrometric analysis. If the electrolyte has a peak at 1550 to 1700 cm$^{-1}$, for example, according to infrared spectroscopic measurement performed thereafter, the electrolyte includes a nitrogen-containing compound, which confirms that the electrolyte includes a compound having an amide bond.

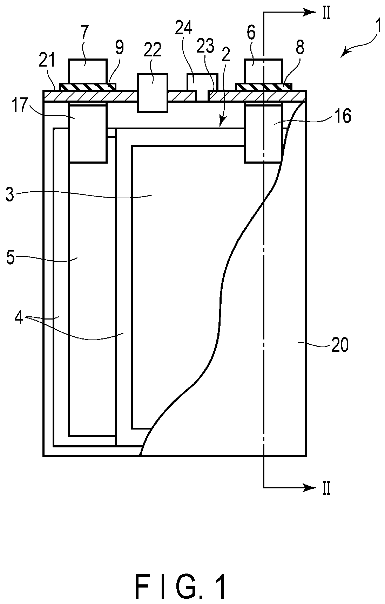

An example in which the battery of the approach is applied to a secondary battery will be described with reference to FIGS. 1 to 4.

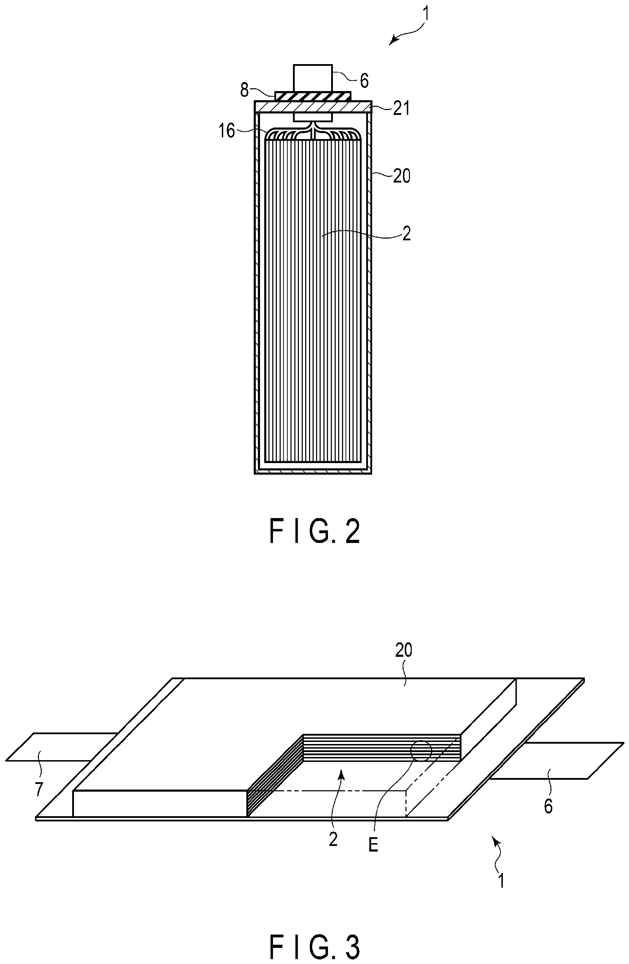

A secondary battery 1 includes an electrode group 2 and a container member 20 which houses the electrode group 2. The electrode group 2 is housed in the container member 20 made of a metallic container having a rectangular tubular shape. The electrode group 2 includes a negative electrode 3, a separator 4, and a positive electrode 5. The electrode group 2 has a structure in which the positive electrode 5 and the negative electrode 3 are spirally wound into a flat shape with the separator 4 interposed therebetween. An aqueous electrolyte (not shown) is held by the electrode group 2. As shown in FIG. 2, a strip-shaped negative electrode lead 16 is electrically connected to each of the multiple portions of the end of the negative electrode 3 positioned on the end face of the electrode group 2. A strip-shaped positive electrode lead 17 is also electrically connected to each of the multiple portions of the end of the positive electrode 5 positioned on this end face. A bundle of the negative electrode leads 16 is electrically connected to a negative electrode terminal 6, as shown in FIG. 2. Although not shown, a bundle of the positive electrode leads 17 is also electrically connected to a positive electrode terminal 7.

A sealing plate 21 made of a metal is fixed to an opening of the metallic container member 20 by welding or the like. Each of the negative electrode terminal 6 and the positive electrode terminal 7 is drawn to the outside from an ejection hole provided to the sealing plate 21. A negative electrode gasket 8 and a positive electrode gasket 9 are arranged on the inner peripheral surface of each ejection hole of the sealing plate 21 in order to avoid a short circuit caused by a contact between the negative electrode terminal 6 and the positive electrode terminal 7. Arranging the negative electrode gasket 8 and the positive electrode gasket 9 can maintain the airtightness of a secondary battery 100.

A control valve 22 (safety valve) is arranged on the sealing plate 21. If an inner pressure of a battery is increased due to the gas generated in the container member 20, the generated gas can be diffused from the control valve 22 to the outside. For example, a recoverable valve that operates when the inner pressure becomes higher than a set value and functions as a sealing plug when the inner pressure decreases can be used as the control valve 22. Alternatively, it is possible to use a non-recoverable control valve whose function as a sealing plug does not recover once the control valve operates. Although the control valve 22 is arranged in the center of the sealing plate 21 in FIG. 1, it may be positioned at an end of the sealing plate 21. The control valve 22 may be omitted.

The sealing plate 21 is provided with an injection port 23. An electrolyte may be injected through the injection port 23. The injection port 23 may be closed by a sealing plug 24 after the electrolyte is injected. The injection port 23 and the sealing plug 24 may be omitted.

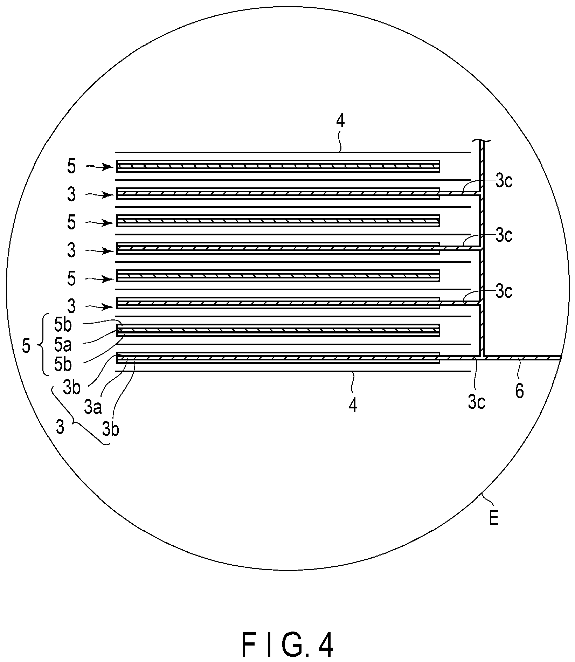

Another example of the secondary battery will be described with reference to FIGS. 3 and 4. FIGS. 3 and 4 respectively show an example of the secondary battery 1 that uses a container member made of a laminated film as a container.

The secondary battery 1 shown in FIGS. 3 and 4 includes the electrode group 2 shown in FIGS. 3 and 4, the container member 20 shown in FIG. 3, and the electrolyte (not shown). The electrode group 2 and the electrolyte are housed in the container member 20. The electrolyte is held by the electrode group 2.

The container member 20 is made of a laminated film including two resin layers and a metal layer interposed therebetween.

As shown in FIG. 4, the electrode group 2 is a stacked electrode group. The stacked electrode group 2 has a structure in which the negative electrode 3 and the positive electrode 5 are alternately stacked with the separator 4 interposed therebetween.

The electrode group 2 includes a plurality of negative electrodes 3. Each of the negative electrodes 3 includes a negative electrode current collector 3a, and a negative electrode active material-containing layer 3b supported on both surfaces of the negative electrode current collector 3a. Also, the electrode group 2 includes a plurality of positive electrodes 5. Each of the positive electrodes 5 includes a positive electrode current collector 5a, and a positive electrode active material-containing layer 5b supported on both surfaces of the positive electrode current collector 5a.

The negative electrode current collector 3a of each negative electrode 3 includes, at one side thereof, a portion 3c that does not have the negative electrode active material-containing layer 3b supported on any of its surfaces. This portion 3c serves as a negative electrode current-collecting tab. The portion 3c that serves as a negative electrode current-collecting tab does not overlap with the positive electrode 5, as shown in FIG. 4. The plurality of negative electrode current-collecting tabs (the portion 3c) are electrically connected to the strip-shaped negative electrode terminal 6. The tip of the strip-shaped negative electrode terminal 6 is drawn out of the container member 20.

Although not shown in the figure, the positive electrode current collector 5a of each positive electrode 5 includes, at one side thereof, a portion that does not have the positive electrode active material-containing layer 5b supported on any of its surfaces. This portion serves as a positive electrode current-collecting tab. The positive electrode current-collecting tab does not overlap with the negative electrode 3, as in the case of the negative electrode current-collecting tab (the portion 3c). Also, the positive electrode current-collecting tab is positioned on the opposite side of the electrode group 2 relative to the negative electrode current-collecting tab (the portion 3c). A strip-shaped positive electrode terminal 7 is electrically connected to the positive electrode current-collecting tab. The tip of the strip-shaped positive electrode terminal 7 is positioned on the opposite side relative to the negative electrode terminal 6, and drawn out of the container member 20.

The battery of the approach described above includes a positive electrode, a negative electrode, and a water-containing electrolyte. The negative electrode includes a negative electrode active material-containing layer that includes a Ti-containing oxide and a binder capable of containing water. Also, the battery satisfies the following expression (1):

$$0.2 \leq W_{bind}/W_{H2O} \leq 15 \quad (1)$$

where $W_{bind}$ denotes a content (% by weight) of the binder capable of containing water in the negative electrode active material-containing layer, and $W_{H2O}$ denotes a content (% by weight) of the water in the electrolyte.

According to the above battery, it is not only possible to suppress the electrolysis of water but also possible to improve the adhesion between the active material-containing layer and the current collector and the retention of the aqueous electrolyte in the active material-containing layer. Therefore, the battery of the approach can improve the charge-and-discharge cycle performance.

(Second Approach)

According to a second approach, a battery module is provided. The battery module includes a plurality of secondary batteries according to the approach.

In the battery module according to the approach, individual single batteries may be arranged to be electrically connected in series or in parallel, or may be arranged in a combination of in-series connection and in-parallel connection.

Next, an example of the battery module will be described with reference to the drawings.

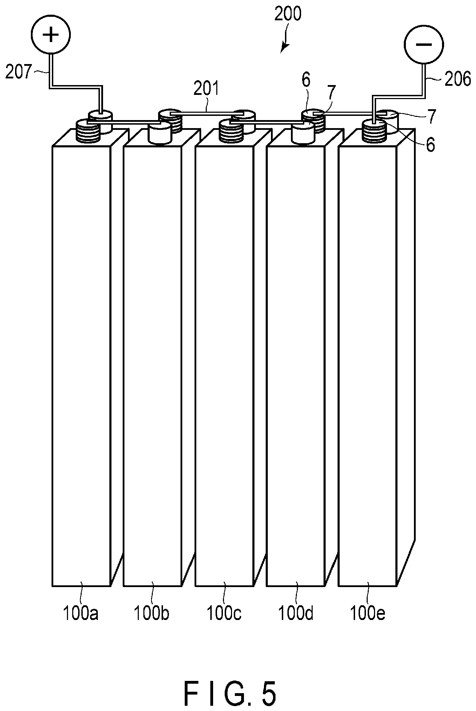

A battery module 200 shown in FIG. 5 includes five single batteries 100a to 100e, four bus bars 201, a positive electrode-side lead 207, and a negative electrode-side lead 206. Each of the five single batteries 100a to 100e is the secondary battery according to the approach.

The bus bar 201 connects, for example, a negative electrode terminal 6 of one single battery 100a and a positive electrode terminal 7 of a single battery 100b positioned adjacent to the single battery 100a. In this way, the five single batteries 100 are connected in series by the four bus bars 201. That is, the battery module 200 shown in FIG. 5 is a battery module of five in-series connections. Although not shown, in the battery module that includes single batteries that are electrically connected in parallel, for example, the negative electrode terminals are connected by the bus bars and the positive electrode terminals are connected by the bus bars, whereby the plurality of single batteries may be electrically connected.

The positive electrode terminal 7 of at least one of the five single batteries 100a to 100e is electrically connected to the positive electrode-side lead 207 for external connection. Also, the negative electrode terminal 6 of at least one of the five single batteries 100a to 100e is electrically connected to the negative electrode-side lead 206 for external connection.

The battery module according to the approach includes the battery according to the approach. Therefore, the battery module can have excellent life performance.

(Third Approach)

According to a third approach, a battery pack which includes the battery according to the approach is provided. The battery pack may include the battery module according to the approach. The battery pack may include a single battery in place of the battery module according to the approach.

The battery pack may further include a protective circuit. The protective circuit functions to control charge and discharge of the secondary battery. Alternatively, a circuit included in devices (such as electronic devices or automobiles) that use a battery pack as a power source may be used as the protective circuit of the battery pack.

The battery pack may further include an external power distribution terminal. The external power distribution terminal is configured to output current from the secondary battery to the outside and/or to input current to the secondary battery from the outside. In other words, when the battery pack is used as a power source, current is supplied to the outside via the external power distribution terminal. When the battery pack is to be charged, charging current (including a regenerative energy of a motive force of automobiles and the like) is supplied to the battery pack via the external power distribution terminal.

Next, an example of the battery pack according to the approach will be described with reference to the drawings.

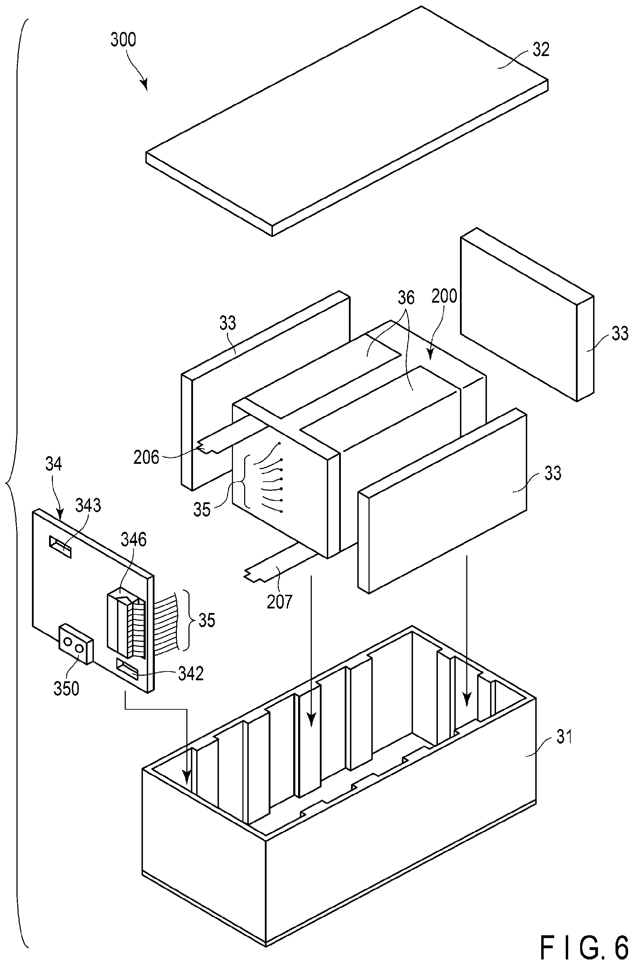

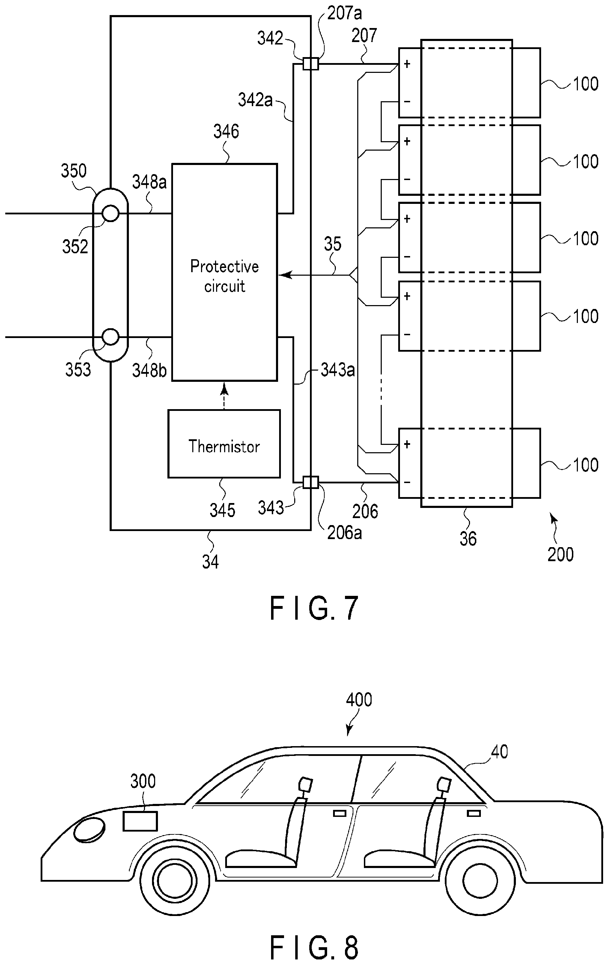

A battery pack 300 shown in FIGS. 6 and 7 includes a housing container 31, a lid 32, protective sheets 33, a battery module 200, a printed wiring board 34, wires 35, and an insulating plate (not shown).

The housing container 31 shown in FIG. 6 is a bottomed square-shaped container having a rectangular bottom surface. The housing container 31 is configured to house the protective sheets 33, the battery module 200, the printed wiring board 34, and the wires 35. The lid 32 has a rectangular shape. The lid 32 covers the housing container 31 to house the battery module 200 and the like. Although not shown, for example, opening(s) or connection terminal(s) for connecting to external device(s) and the like are provided on the housing container 31 and lid 32.

The battery module 200 includes a plurality of single batteries 100, a positive electrode-side lead 207, a negative electrode-side lead 206, and adhesive tape(s) 36.

At least one of the single batteries 100 is the secondary battery according to the approach. The single batteries 100 are electrically connected to each other in series, as shown in FIG. 7. Alternatively, the single batteries 100 may be electrically connected in parallel or in a combination of in-series connection and in-parallel connection. When the single batteries 100 are connected in parallel, the battery capacity increases as compared to the case where the single batteries are connected in series.

The adhesive tape(s) 36 fasten(s) the single batteries 100. The single batteries 100 may be fixed using a heat-shrinkable tape in place of the adhesive tape(s) 36. In this case, the protective sheets 33 are arranged on both side surfaces of the battery module 200, and the heat-shrinkable tape is wound around the battery module 200 and the protective sheets 33. After that, the heat-shrinkable tape is shrunk by heating to bundle the single batteries 100.

One end of the positive electrode-side lead 207 is connected to the battery module 200. One end of the positive electrode-side lead 207 is electrically connected to the positive electrode of one or more single batteries 100. One end of the negative electrode-side lead 206 is connected to the battery module 200. One end of the negative electrode-side lead 206 is electrically connected to the negative electrode of one or more single batteries 100.

The printed wiring board 34 is arranged on the inner surface of the housing container 31 along the short side direction. The printed wiring board 34 includes a positive electrode-side connector 342, a negative electrode-side connector 343, a thermistor 345, a protective circuit 346, wires 342a and 343a, an external power distribution terminal 350, a plus-side wire (positive-side wire) 348a, and a minus-side wire (negative-side wire) 348b. One of the main surfaces of the printed wiring board 34 faces a side surface of the battery module 200. An insulating plate (not shown) is interposed between the printed wiring board 34 and the battery module 200.

The other end 207a of the positive electrode-side lead 207 is electrically connected to the positive electrode-side connector 342. The other end 206a of the negative electrode-side lead 206 is electrically connected to the negative electrode-side connector 343.

The thermistor 345 is fixed to one of the main surfaces of the printed wiring board 34. The thermistor 345 detects the temperature of each of the single batteries 100, and the detection signals are transmitted to the protective circuit 346.

The external power distribution terminal 350 is fixed to the other of the main surfaces of the printed wiring board 34. The external power distribution terminal 350 is electrically connected to a device(s) outside the battery pack 300. The external power distribution terminal 350 includes a positive-side terminal 352 and a negative-side terminal 353.

The protective circuit 346 is fixed to the other of the main surfaces of the printed wiring board 34. The protective circuit 346 is connected to the positive-side terminal 352 via the plus-side wire 348a. The protective circuit 346 is connected to the negative-side terminal 353 via the minus-side wire 348b. The protective circuit 346 is also electrically connected to the positive electrode-side connector 342 via the wire 342a. The protective circuit 346 is electrically connected to the negative electrode-side connector 343 via the wire 343a. Further, the protective circuit 346 is electrically connected to each of the single batteries 100 via the wire 35.

The protective sheets 33 are arranged on both inner surfaces of the housing container 31 along the long side direction and on one inner surface of the housing container 31 along the short side direction facing the printed wiring board 34 through the battery module 200. The protective sheets 33 are made of, for example, resin or rubber.

The protective circuit 346 controls charge and discharge of the single batteries 100. The protective circuit 346 is also configured to cut off electric connection between the protective circuit 346 and the external power distribution terminal 350 (the positive-side terminal 352 and the negative-side terminal 353), based on detection signals transmitted from the thermistor 345 or detection signals transmitted from each single battery 100 or the battery module 200.

An example of the detection signal transmitted from the thermistor 345 is a signal indicating that the temperatures of the single batteries 100 are detected to be a predetermined temperature or higher. An example of the detection signal transmitted from the individual single batteries 100 or the battery module 200 is a signal indicating detection of over-charge, over-discharge, and over-current of the single batteries 100. In the case of detecting over-charge, etc., of the individual single batteries 100, a battery voltage may be detected, or a positive electrode potential or a negative electrode potential may be detected. In the latter case, a lithium electrode used as a reference electrode is inserted into each single battery 100.

A circuit included in devices (such as electronic devices or automobiles) that use the battery pack 300 as a power source may be used as the protective circuit 346.

The battery pack 300 also includes the external power distribution terminal 350, as described above. Thus, the battery pack 300 can output current from the battery module 200 to an external device and input current from an external device to the battery module 200 via the external power distribution terminal 350. In other words, when using the battery pack 300 as a power source, current from the battery module 200 is supplied to an external device via the external power distribution terminal 350. When charging the battery pack 300, charging current from an external device is supplied to the battery pack 300 via the external power distribution terminal 350. If the battery pack 300 is used as an in-vehicle battery, a regenerative energy of a motive force of a vehicle can be used as the charging current from the external device.

The battery pack 300 may include a plurality of battery modules 200. In this case, the plurality of battery modules 200 may be connected in series, in parallel, or in a combination of in-series connection and in-parallel connection. The printed wiring board 34 and the wire 35 may be omitted. In this case, the positive electrode-side lead 207 and the negative electrode-side lead 206 may be used as the positive-side terminal and the negative-side terminal of the external power distribution terminal, respectively.

Such a battery pack is used, for example, in applications where excellent cycle performance is demanded when a large current is extracted. Specifically, the battery pack is used as a power source of electronic devices, a stationary battery, and an in-vehicle battery for various vehicles. An example of the electronic devices is a digital camera. The battery pack is particularly suitably used as an in-vehicle battery.

The battery pack according to the third approach includes the battery according to the approach or the battery module according to the approach. Therefore, the battery pack has excellent life performance.

<Fourth Approach>

According to a fourth approach, a vehicle that includes the battery pack according to the approach is provided.

In the vehicle according to the approach, the battery pack is configured, for example, to recover a regenerative energy from a motive force of the vehicle. The vehicle may include a mechanism (regenerator) for converting a kinetic energy of the vehicle into a regenerative energy.

Examples of the vehicle according to the approach include two- or four-wheeled hybrid electric automobiles, two- or four-wheeled electric automobiles, power-assisted bicycles, and railway vehicles.

In the vehicle according to the approach, the installing position of the battery pack is not particularly limited. For example, when installing the battery pack in an automobile, the battery pack can be installed in the engine compartment of the vehicle, in a rear part of the vehicle or under a seat.

The vehicle according to the approach may include a plurality of battery packs. In this case, the batteries included in the respective battery packs may be electrically connected in series, in parallel, or in a combination of in-series connection and in-parallel connection. If the respective battery packs include a battery module, for example, the battery modules may be electrically connected in series, in parallel, or in a combination of in-series connection and in-parallel connection. Alternatively, if the respective battery packs include a single battery, the batteries may be electrically connected in series, in parallel, or in a combination of in-series connection and in-parallel connection.

Next, an example of the vehicle according to the approach will be described with reference to the drawings.

A vehicle 400 shown in FIG. 8 includes a vehicle body 40 and the battery pack 300 according to the approach. In the example shown in FIG. 8, the vehicle 400 is a four-wheeled automobile.

The vehicle 400 may include a plurality of battery packs 300. In this case, the batteries (e.g., single batteries or battery modules) included in the battery packs 300 may be connected in series, in parallel, or in a combination of in-series connection and in-parallel connection.

FIG. 8 shows an example in which the battery pack 300 is installed in the engine compartment in front of the vehicle body 40. The battery pack 300 may be installed, for example, in a rear part of the vehicle body 40, or under a seat. The battery pack 300 may be used as a power source of the vehicle 400. The battery pack 300 can also recover a regenerative energy of a motive force of the vehicle 400.

The vehicle according to the fourth approach includes the battery pack according to the approach. Therefore, the vehicle can exhibit high performance and has high reliability.

<Fifth Approach>

According to a fifth approach, a stationary power supply that includes the battery pack according to the approach is provided.

The stationary power supply according to the approach may include the battery module according to the approach or the battery according to the approach, instead of the battery pack according to the approach. The stationary power supply according to the approach can exhibit a long life.

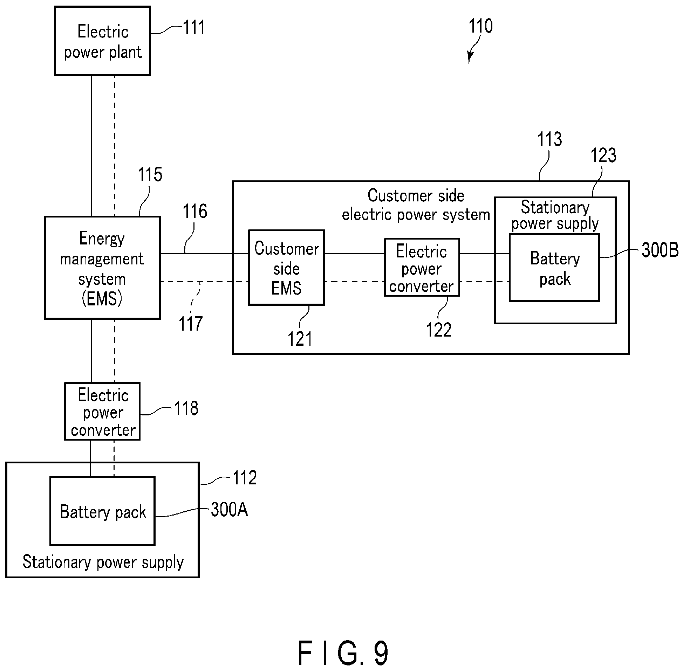

FIG. 9 shows an example of application to stationary power supplies 112 and 123 as an example of use of the battery packs 300A and 300B according to the approach. An example shown in FIG. 9 presents a system 110 which uses the stationary power supplies 112 and 123. The system 110 includes an electric power plant 111, the stationary power supply 112, a customer side electric power system 113, and an energy management system (EMS) 115. An electric power network 116 and a communication network 117 are formed in the system 110, and the electric power plant 111, the stationary power supply 112, the customer side electric power system 113 and the EMS 115 are connected via the electric power network 116 and the communication network 117. The EMS 115 utilizes the electric power network 116 and the communication network 117 to perform control to stabilize the entire system 110.

The electric power plant 111 generates a large amount of electric power from fuel sources such as thermal power and nuclear power. Electric power is supplied from the electric power plant 111 through the electric power network 116 and the like. The battery pack 300A is installed in the stationary power supply 112. The battery pack 300A can store electric power and the like supplied from the electric power plant 111. The stationary power supply 112 can also supply the electric power stored in the battery pack 300A through the electric power network 116 and the like. The system 110 is provided with an electric power converter 118. The electric power converter 118 includes a converter, an inverter, a transformer and the like. Thus, the electric power converter 118 can perform conversion between direct current and alternate current, conversion between alternate currents of different frequencies, voltage transformation (step-up and step-down), and the like. Accordingly, the electric power converter 118 can convert electric power from the electric power plant 111 into electric power that can be stored in the battery pack 300A.

The customer side electric power system 113 includes an electric power system for factories, an electric power system for buildings, an electric power system for home use, and the like. The customer side electric power system 113 includes a customer side EMS 121, an electric power converter 122, and the stationary power supply 123. The battery pack 300B is installed in the stationary power supply 123. The customer side EMS 121 performs control to stabilize the customer side electric power system 113.

Electric power from the electric power plant 111 and electric power from the battery pack 300A are supplied to the customer side electric power system 113 through the electric power network 116. The battery pack 300B can store electric power supplied to the customer side electric power system 113. Similarly to the electric power converter 118, the electric power converter 122 includes a converter, an inverter, a transformer and the like. Thus, the electric power converter 122 can perform conversion between direct current and alternate current, conversion between alternate currents of different frequencies, voltage transformation (step-up and step-down), and the like. Accordingly, the electric power converter 122 can convert electric power supplied to the customer side electric power system 113 into electric power that can be stored in the battery pack 300B.

The electric power stored in the battery pack 300B can be used, for example, for charging a vehicle such as an electric automobile. The system 110 may also be provided with a natural energy source. In this case, the natural energy source generates electric power from natural energy such as wind power and solar light. In addition to the electric power plant 111, electric power is also supplied from the natural energy source through the electric power network 116.

(EXAMPLES)

Examples will be described below to explain the above approaches in more detail; however, the inventions are not limited to these examples as long as the inventions do not deviate from the gist of the inventions.

(Example 1)

A secondary battery was produced according to the procedure described below.

<Production of Negative Electrode>

Particles of a monoclinic niobium titanium-containing oxide having a composition represented by $TiNb_2O_7$ were provided as a negative electrode active material. The monoclinic niobium titanium-containing oxide has a composition represented by $Li_aTiNb_2O_7$ ($0 \le a \le 5$) in a battery. In addition, acetylene black was provided as a conductive agent, and carboxymethyl cellulose (CMC) and styrene-butadiene rubber (SBR) were provided as a binder capable of containing water. They were mixed in pure water at a weight ratio (% by weight) of negative electrode active material : acetylene black : carboxymethyl cellulose : styrene-butadiene rubber of 95 : 4.2 : 0.4 : 0.4, to obtain a slurry. This slurry was applied onto a current collector made of an aluminum foil having a thickness of 15 $\mu$m, and the coating was dried. In this manner, a composite including a current collector and a negative electrode active material-containing layer formed on the current collector was obtained. Next, the composite thus obtained was subjected to roll pressing. Then, the composite was further vacuum-dried, whereby a negative electrode was obtained.

<Production of Positive Electrode>

Particles of a lithium nickel cobalt manganese composite oxide represented by $LiNi_{0.33}Mn_{0.33}Co_{0.33}O_2$ (referred to as "NMC111") were provided as a positive electrode active material. In addition, acetylene black was provided as a conductive agent, and polyvinylidene fluoride (PVdF) was provided as a binder. They were mixed at a weight ratio (% by weight) of positive electrode active material : conductive agent : binder of 90 : 5 : 5, to obtain a mixture. Next, the obtained mixture was dispersed in an n-methylpyrrolidone (NMP) solvent to prepare a positive electrode slurry. This slurry was applied onto a current collector made of an aluminum foil having a thickness of 15 um, and the coating was dried. In this manner, a composite including a current collector and a positive electrode active material-containing layer formed on both sides of the current collector was obtained. Next, the composite thus obtained was subjected to roll pressing. Then, the composite was further vacuum-dried, whereby a positive electrode was obtained.

The positive electrode and the negative electrode were respectively cut out so that the area of the active material-containing layer was a width of 3 cm and the height was 5 cm. A single negative electrode and a single positive electrode were stacked with a cellulose separator having a thickness of 30 um interposed therebetween, to prepare an electrode stack as an electrode group. Also, in order to collect current, an aluminum tab having a thickness of 0.2 mm was attached to the negative electrode and the positive electrode. The electrode stack prepared was housed in a container member made of a laminated film, a liquid aqueous electrolyte (aqueous electrolytic solution) was injected thereinto, and then the container member was sealed, whereby a secondary battery was obtained.

The liquid aqueous electrolyte had a composition consisting of 56.0% by weight of $LiN(CF_3SO_2)_2$(LiTFSI), 39.8% by weight of urea, 0.2% by weight of KOH, and 4% by weight of $H_2O$.

(Example 2)

A negative electrode was produced in the same manner as described in Example 1 except that the weight ratio (% by weight) of negative electrode active
material : acetylene black : CMC : SBR was
92.5 : 4.0 : 1.5 : 2.0.
Also, the composition of the liquid aqueous electrolyte was changed to a composition consisting of 56.0% by weight of $LiN(CF_3SO_2)_2$(LiTFSI), 40.4% by weight of urea, 0.1% by weight of KOH, and 3.5% by weight of $H_2O$.
A secondary battery was produced in the same manner as described in Example 1 except for these changes.

(Example 3)

A negative electrode was produced in the same manner as described in Example 1 except that the weight ratio (% by weight) of negative electrode active
material : acetylene black : CMC : SBR was
91.5 : 4.0 : 2.0 : 2.5.
Also, the composition of the liquid aqueous electrolyte was changed to a composition consisting of 58.2% by weight of $LiN(CF_3SO_2)_2$(LiTFSI), 41.3% by weight of urea, 0.2% by weight of KOH, and 0.3% by weight of $H_2O$.
A secondary battery was produced in the same manner as described in Example 1 except for these changes.

(Examples 4 to 7)

A negative electrode was produced in the same manner as described in Example 2 except that the composition of the negative electrode active material was changed to a composition shown in Table 1. A secondary battery was produced in the same manner as described in Example 2 except that this negative electrode was used. The negative electrode active material of Example 4 had a composition represented by $Li_aTi_2Nb_{10}O_{29}$ ($0 \le a \le 22$) in a battery. The negative electrode active material of Example 5 had a composition represented by $Li_aTi_2Nb_2O_9$ ($0 \le a \le 6$) in a battery. The negative electrode active materials of Examples 6 and 7 had a composition represented by $Li_xTiO_2$ (x is $0 \le x \le 1$) in a battery.

(Example 8)

The composition of the liquid aqueous electrolyte was changed to a composition consisting of 55.9% by weight of $LiN(CF_3SO_2)_2$(LiTFSI), 40.5% by weight of acetamide, 0.1% by weight of KOH, and 3.5% by weight of $H_2O$. A secondary battery was produced in the same manner as described in Example 2, except that this liquid aqueous electrolyte was used.

(Example 9)

Polyvinyl pyrrolidone (PVP) and styrene-butadiene rubber (SBR) were provided as a binder capable of containing water. A negative electrode was produced in the same manner as described in Example 1 except that they were blended so that the weight ratio (% by weight) of negative electrode active material : acetylene black : PVP : SBR was
92.5 : 4.0 : 1.8 : 1.7.
The composition of the liquid aqueous electrolyte was changed to a composition consisting of 51.3% by weight of $LiN(CF_3SO_2)_2$(LiTFSI), 45.0% by weight of N-methylurea, 0.2% by weight of KOH, and 3.5% by weight of $H_2O$. A secondary battery was produced in the same manner as described in Example 1, except that the negative electrode and the liquid aqueous electrolyte described above were used.

(Example 10)

A positive electrode was produced in the same manner as described in Example 1, except that particles of a lithium nickel cobalt manganese composite oxide represented by $LiNi_{0.8}Mn_{0.1}Co_{0.1}O_2$ (referred to as "NMC811") were used as a positive electrode active material.
Also, the composition of the liquid aqueous electrolyte was changed to a composition consisting of 54.0% by weight of $LiN(CF_3SO_2)_2$ (LiTFSI), 2.0% by weight of lithium difluoro (oxalato)borate (LiDFOB), 40.4% by weight of urea, 0.1% by weight of KOH, and 3.5% by weight of $H_2O$. A secondary battery was produced in the same manner as described in Example 2, except that the positive electrode and the liquid aqueous electrolyte described above were used.

(Example 11)

A positive electrode was produced in the same manner as described in Example 1, except that particles of a spinel lithium manganese composite oxide represented by $Li_{1.05}Al_{0.05}Mn_2O_4$ (referred to as "LMO") were used as a positive electrode active material. A secondary battery was produced in the same manner as described in Example 2 except that this positive electrode was used.

(Example 12)

A positive electrode was produced in the same manner as described in Example 1, except that particles of a spinel lithium manganese composite oxide represented by $Li_{1.05}Al_{0.05}Mn_2O_4$ (referred to as "LMO") were used as a positive electrode active material.

The composition of the liquid aqueous electrolyte was changed to a composition consisting of 57.7% by weight of $LiN(CF_3SO_2)_2$(LiTFSI), 41.1% by weight of urea, 0.2% by weight of KOH, and 1.0% by weight of $H_2O$.

A secondary battery was produced in the same manner as described in Example 2, except that the positive electrode and the liquid aqueous electrolyte described above were used.

(Example 13)

A positive electrode was produced in the same manner as described in Example 1, except that particles of a spinel lithium manganese composite oxide represented by $Li_{1.05}Al_{0.05}Mn_2O_4$ (referred to as "LMO") were used as a positive electrode active material.

A negative electrode was produced in the same manner as described in Example 1 except that the weight ratio (% by weight) of negative electrode active material : acetylene black : CMC : SBR was 92 : 4.0 : 2.0 : 2.0.

Also, the composition of the liquid aqueous electrolyte was changed to a composition consisting of 53.7% by weight of $LiN(CF_3SO_2)_2$(LiTFSI), 38.1% by weight of urea, 0.2% by weight of KOH, and 8.0% by weight of $H_2O$.

A secondary battery was produced in the same manner as described in Example 1, except that the positive electrode, the negative electrode, and the liquid aqueous electrolyte described above were used.

(Comparative Example 1)

The composition of the liquid aqueous electrolyte was changed to a composition consisting of 53.7% by weight of $LiN(CF_3SO_2)_2$(LiTFSI), 38.1% by weight of urea, 0.2% by weight of KOH, and 8.0% by weight of $H_2O$. A secondary battery was produced in the same manner as described in Example 1, except that this liquid aqueous electrolyte was used.

(Comparative Example 2)

A negative electrode was produced in the same manner as described in Example 1 except that the weight ratio (% by weight) of negative electrode active material : acetylene black : CMC : SBR was 90 : 4.0 : 2.0 : 4.0.

Also, the composition of the liquid aqueous electrolyte was changed to a composition consisting of 58.2% by weight of $LiN(CF_3SO_2)_2$(LiTFSI), 41.3% by weight of urea, 0.2% by weight of KOH, and 0.3% by weight of $H_2O$.

A secondary battery was produced in the same manner as described in Example 1, except that the negative electrode and the liquid aqueous electrolyte described above were used.

(Comparative Example 3)

Particles of a monoclinic niobium titanium-containing oxide having the same composition as that of Example 1 were provided as a negative electrode active material. In addition, acetylene black was provided as a conductive agent, and polyvinylidene fluoride (PVdF) was provided as a binder. They were mixed in n-methylpyrrolidone (NMP) at a weight ratio (% by weight) of negative electrode active material : acetylene black : PVdF of 94 : 4.0 : 2.0, to obtain a slurry. This slurry was applied onto a current collector made of an aluminum foil having a thickness of 15 $\mu$m, and the coating was dried. In this manner, a composite including a current collector and a negative electrode active material-containing layer formed on the current collector was obtained. Next, the composite thus obtained was subjected to roll pressing. Then, the composite was further vacuum-dried, whereby the negative electrode was obtained.

A secondary battery was produced in the same manner as described in Example 2 except that the above negative electrode was used.

<Evaluation>

After initial charge and discharge were performed on the secondary batteries obtained in the Examples and the Comparative Examples described above, a charge-and-discharge cycle life was measured at 25 °C. At 25 °C, the batteries were charged up to 2.6 V at 0.2 C, and then discharged down to 1.5 V at 0.2 C. This charge-and-discharge cycle was repeated 50 times, and the retention rate (%) of the discharge capacity in the 50th cycle relative to the discharge capacity in the 1st cycle was calculated. The retention rate thus calculated is shown in Table 3 as a capacity retention ratio during the charge-and-discharge cycle.

Table 1 shows the composition of the negative electrode active material, the composition of the positive electrode active material, the content $W_{bind}$ (% by weight) of the binder capable of containing water in the negative electrode active material-containing layer, the content $W_{H2O}$ (% by weight) of water in the electrolyte, and a ratio represented by $W_{bind}/W_{H2O}$. $W_{bind}$ (% by weight) and $W_{H2O}$ (% by weight) were measured by the method described above. Table 2 shows the types of the binders of the negative electrode and the composition of the aqueous electrolytic solution.

<Table 1>

| Table 1 | Composition of Negative Electrode Active Material | Composition of Positive Electrode Active Material | $W_{bind}/W_{H2O}$ | $W_{bind}$ (% by weight) | $W_{H2O}$ (% by weight) |
|---|---|---|---|---|---|
| Example 1 | $TiNb_2O_7$ | NMC111 | 0.2 | 0.8 | 4.0 |
| Example 2 | $TiNb_2O_7$ | NMC111 | 1 | 3.5 | 3.5 |
| Example 3 | $TiNb_2O_7$ | NMC111 | 15 | 4.5 | 0.3 |
| Example 4 | $Ti_2Nb_{10}O_{29}$ | NMC111 | 1 | 3.5 | 3.5 |
| Example 5 | $Ti_2Nb_2O_9$ | NMC111 | 1 | 3.5 | 3.5 |
| Example 6 | $TiO_2$ (B) | NMC111 | 1 | 3.5 | 3.5 |
| Example 7 | Anatase-type $TiO_2$ | NMC111 | 1 | 3.5 | 3.5 |
| Example 8 | $TiNb_2O_7$ | NMC111 | 1 | 3.5 | 3.5 |
| Example 9 | $TiNb_2O_7$ | NMC111 | 1 | 3.5 | 3.5 |
| Example 10 | $TiNb_2O_7$ | NMC811 | 1 | 3.5 | 3.5 |
| Example 11 | $TiNb_2O_7$ | LMO | 1 | 3.5 | 3.5 |
| Example 12 | $TiNb_2O_7$ | LMO | 1 | 3.5 | 1.0 |
| Example 13 | $TiNb_2O_7$ | LMO | 0.5 | 4.0 | 8.0 |
| Comparative Example 1 | $TiNb_2O_7$ | NMC111 | 0.1 | 0.8 | 8.0 |
| Comparative Example 2 | $TiNb_2O_7$ | NMC111 | 20 | 6 | 0.3 |
| Comparative Example 3 | $TiNb_2O_7$ | NMC111 | - | - | 3.5 |

<Table 2>

| Table 2 | Type of Negative Electrode Binder | Composition of Aqueous Electrolytic Solution |
|---|---|---|
| Example 1 | CMC and SBR | LiTFSI, Urea, KOH, and $H_2O$ 4% by weight |
| Example 2 | CMC and SBR | LiTFSI, Urea, KOH, and $H_2O$ 3.5% by weight |

(continued)

| Table 2 | Type of Negative Electrode Binder | Composition of Aqueous Electrolytic Solution |
|---|---|---|
| Example 3 | CMC and SBR | LiTFSI, Urea, KOH, and $H_2O$ 0.3% by weight |
| Example 4_ | CMC and SBR | LiTFSI, Urea, KOH, and $H_2O$ 3.5% by weight |
| Example 5 | CMC and SBR | LiTFSI, Urea, KOH, and $H_2O$ 3.5% by weight |
| Example 6 | CMC and SBR | LiTFSI, Urea, KOH, and $H_2O$ 3.5% by weight |
| Example 7 | CMC and SBR | LiTFSI, Urea, KOH, and $H_2O$ 3.5% by weight |
| Example 8 | CMC and SBR | LiTFSI, Acetamide, KOH, and $H_2O$ 3.5% by weight |
| Example 9 | PVP and SBR | LiTFSI, N-Methylurea, KOH, and $H_2O$ 3.5% by weight |
| Example 10 | CMC and SBR | LiTFSI, LiDFOB, Urea, KOH, and $H_2O$ 3.5% by weight |
| Example 11 | CMC and SBR | LiTFSI, Urea, KOH, and $H_2O$ 3.5% by weight |
| Example 12 | CMC and SBR | LiTFSI, Urea, KOH, and $H_2O$ 1.0% by weight |
| Example 13 | CMC and SBR | LiTFSI, Urea, KOH, and $H_2O$ 8.0% by weight |
| Comparative Example 1 | CMC and SBR | LiTFSI, Urea, KOH, and $H_2O$ 8.0% by weight |
| Comparative Example 2 | CMC and SBR | LiTFSI, Urea, KOH, and $H_2O$ 0.3% by weight |
| Comparative Example 3 | PVdF | LiTFSI, Urea, KOH, and $H_2O$ 3.5% by weight |

<Table 3>

| Table 3 | Charge-And-Discharge Cycle Life |
|---|---|
| Example 1 | 87% |
| Example 2 | 91% |
| Example 3 | 90% |
| Example 4 | 90% |
| Example 5 | 88% |
| Example 6 | 88% |
| Example 7 | 85% |
| Example 8 | 90% |
| Example 9 | 89% |
| Example 10 | 88% |
| Example 11 | 92% |
| Example 12 | 94% |
| Example 13 | 87% |
| Comparative Example 1 | 73% |
| Comparative Example 2 | 81% |
| Comparative Example 3 | 81% |

As is apparent from Tables 1 to 3, the charge-and-discharge cycle life of the secondary batteries of Examples 1 to 13, which satisfied $0.2 \leq W_{bind}/W_{H2O} \leq 15$, was more excellent than the charge-and-discharge cycle life of the secondary batteries of Comparative Examples 1 to 3. Although Comparative Examples 1 and 2 used a binder capable of containing water, the ratio represented by $W_{bind}/W_{H2O}$ did not satisfy the above range. On the other hand, since Comparative Example 3 used PVdF as a binder, PVdF was decomposed by the water in the electrolytic solution, and the negative electrode active material-containing layer was peeled off the current collector. Therefore, the charge-and-discharge cycle life of the battery of Comparative Example 3 was shorter than the charge-and-discharge cycle life of the batteries of Examples 1 to 13.

A comparison of Example 2 with Examples 4 to 7 reveals that the charge-and-discharge cycle life of the battery of Example 2, which includes a monoclinic niobium titanium-containing oxide represented by $Li_aTiM_bNb_{2\pm\beta}O_{7\pm\sigma}$ ($0 \leq a \leq 5$, $0 \leq b \leq 0.3$, $0 \leq \beta \leq 0.3$, $0 \leq \sigma \leq 0.3$, and M is at least one selected from the group consisting of Fe, V, Mo, and Ta) as a negative electrode active material is more excellent than the charge-and-discharge cycle life of the batteries of Examples 4 to 7.

A comparison of Example 2 with Examples 8 and 9 reveals that the charge-and-discharge cycle life of the battery of Example 2, which includes urea as a compound including an amide bond, is more excellent than the charge-and-discharge cycle life of the batteries of Examples 8 and 9.

Since the battery of at least one of the approaches or examples described above satisfies the expression (1), electrolysis of water can be suppressed, and the life performance can be improved.

$$0.2 \leq W_{bind}/W_{H2O} \leq 15 \quad (1)$$

where $W_{bind}$ denotes a content (% by weight) of the binder capable of containing water in the negative electrode active material-containing layer, and $W_{H2O}$ denotes a content (% by weight) of the water in the electrolyte.

The inventions of the approaches are appended below.

<1>. A battery including:

a positive electrode;
a negative electrode including a negative electrode active material-containing layer that includes a Ti-containing oxide and a binder capable of containing water; and
a water-containing electrolyte,
the battery satisfying following expression (1):

$$0.2 \leq W_{bind}/W_{H2O} \leq 15 \quad (1)$$

where $W_{bind}$ denotes a content (% by weight) of the binder capable of containing water in the negative electrode active material-containing layer, and $W_{H2O}$ denotes a content (% by weight) of water in the electrolyte.

<2>. The battery according to clause <1>, wherein the $W_{H2O}$ is 10% by weight or less, and the $W_{bind}$ is 0.8% by weight to 6% by weight.
<3>. The battery according to any one of clauses <1> or <2>, wherein the $W_{H2O}$ is 0.3% by weight or more.
<4>. The battery according to any one of clauses <1> to <3>, wherein the binder capable of containing water includes at least one selected from the group consisting of carboxymethyl cellulose, a salt of carboxymethyl cellulose, styrene-butadiene rubber, and polyvinyl pyrrolidone.
<5>. The battery according to any one of clauses <1> to <4>, wherein the electrolyte further includes a compound including an amide bond, and at least one lithium salt selected from the group consisting of $LiN(FSO_2)_2$, $LiN(CF_3SO_2)_2$, and $LiN(SO_2C_2F_5)_2$.
<6>. The battery according to any one of clauses <1> to <5>, wherein the Ti-containing oxide includes at least one of a niobium titanium-containing oxide or a titanium oxide.
<7>. The battery according to any one of clauses <1> to <6>, wherein the Ti-containing oxide includes at least one selected from the group consisting of: a niobium titanium-containing oxide which includes at least one crystal phase selected from the group consisting of $TiNb_2O_7$, $Ti_2Nb_2O_9$, $Ti_2Nb_{10}O_{29}$, $TiNb_{14}O_{37}$, and $TiNb_{24}O_{62}$; a titanium oxide having a monoclinic structure; a titanium oxide having a rutile structure; and a titanium oxide having an anatase structure.
<8>. The battery according to any one of clauses <1> to <7>, wherein the Ti-containing oxide includes at least one selected from the group consisting of a niobium titanium-containing oxide having a monoclinic structure, a titanium oxide having a monoclinic structure, a titanium oxide having a rutile structure, and a titanium oxide having an anatase structure.

<9>. A battery pack including the battery according to any one of clauses <1> to <8>.

<10>. The battery pack according to <9>, further including:

an external power distribution terminal; and
a protective circuit.

<11>. The battery pack according to any one of clauses <9> or <10>, including a plurality of the battery, wherein the batteries are electrically connected in series, in parallel, or in combination of series and parallel.

<12>. A vehicle including the battery pack according to any one of clauses <9> to <11>.

<13>. The vehicle according to <12>, including a mechanism configured to convert kinetic energy of the vehicle into regenerative energy.

<14>. A stationary power source including the battery pack according to any one of clauses <9> to <11>.

While certain approaches have been described, these approaches have been presented by way of example only, and are not intended to limit the scope of the inventions. Indeed, the novel approaches described herein may be embodied in a variety of other forms; furthermore, various omissions, substitutions and changes in the form of the approaches described herein may be made without departing from the spirit of the inventions. The accompanying claims and their equivalents are intended to cover such forms or modifications as would fall within the scope and spirit of the inventions.

**Claims**

1.  A battery (1) comprising:

    a positive electrode (5);
    a negative electrode (3) comprising a negative electrode active material-containing layer (3b) that includes a Ti-containing oxide and a binder capable of containing water; and
    a water-containing electrolyte,
    the battery satisfying following expression (1):

    $$0.2 \leq W_{bind}/W_{H2O} \leq 15 \quad (1)$$

    where $W_{bind}$ denotes a content (% by weight) of the binder capable of containing water in the negative electrode active material-containing layer (3b), and $W_{H2O}$ denotes a content (% by weight) of water in the electrolyte.

2.  The battery (1) according to claim 1, wherein the $W_{H2O}$ is 10% by weight or less, and the $W_{bind}$ is 0.8% by weight to 6% by weight.

3.  The battery (1) according to claim 1 or claim 2, wherein the $W_{H2O}$ is 0.3% by weight or more.

4.  The battery (1) according to any one of claims 1 to 3, wherein the binder capable of containing water comprises at least one selected from the group consisting of carboxymethyl cellulose, a salt of carboxymethyl cellulose, styrene-butadiene rubber, and polyvinyl pyrrolidone.

5.  The battery (1) according to any one of claims 1 to 4, wherein the electrolyte further comprises a compound including an amide bond and at least one lithium salt selected from the group consisting of $LiN(FSO_2)_2$, $LiN(CF_3SO_2)_2$, and $LiN(SO_2C_2F_5)_2$.

6.  The battery (1) according to any one of claims 1 to 5, wherein the Ti-containing oxide comprises at least one of a niobium titanium-containing oxide or a titanium oxide.

7.  The battery (1) according to any one of claims 1 to 6, wherein the Ti-containing oxide comprises at least one selected from the group consisting of: a niobium titanium-containing oxide which includes at least one crystal phase selected from the group consisting of $TiNb_2O_7$, $Ti_2Nb_2O_9$, $Ti_2Nb_{10}O_{29}$, $TiNb_{14}O_{37}$, and $TiNb_{24}O_{62}$; a titanium oxide having a monoclinic structure; a titanium oxide having a rutile structure; and a titanium oxide having an anatase structure.

8. The battery (1) according to any one of claims 1 to 7, wherein the Ti-containing oxide comprises at least one selected from the group consisting of a niobium titanium-containing oxide having a monoclinic structure, a titanium oxide having a monoclinic structure, a titanium oxide having a rutile structure, and a titanium oxide having an anatase structure.

9. A battery pack (300) comprising the battery (1) according to any one of claims 1 to 8.

10. The battery pack (300) according to claim 9, further comprising:

    an external power distribution terminal (350); and
    a protective circuit (34).

11. The battery pack (300) according to claim 10, comprising a plurality of the battery (1), wherein the batteries (1) are electrically connected in series, in parallel, or in combination of series and parallel.

12. A vehicle (400) comprising the battery pack (300) according to any one of claims 9 to 11.

13. The vehicle (400) according to claim 12, comprising a mechanism configured to convert kinetic energy of the vehicle into regenerative energy.

14. A stationary power source (112, 123) comprising the battery pack (300A, 300B) according to any one of claims 9 to 11.

F I G. 1

F I G. 2

F I G. 3

F I G. 4

FIG.5

F I G. 6

F I G. 7

F I G. 8

Electric power plant —111

110

Customer side electric power system

113    123

Stationary power supply

115

Energy management system (EMS)    116

Customer side EMS    Electric power converter    Battery pack —300B

117

121    122

Electric power converter —118

Battery pack —112
—300A

Stationary power supply

FIG. 9

Europäisches
Patentamt

European
Patent Office

Office européen
des brevets

# EUROPEAN SEARCH REPORT

**Application Number**

EP 23 20 4215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/083298 A1 (SUGIZAKI TOMOKO [JP] ET AL) 18 March 2021 (2021-03-18) * paragraphs [0061], [0079], [0122], [0129] – [0135], [0193] – [0214], [0223], [0230] – [0231], [0247] – [0250]; claims 1-13; figures 7-10; examples 1,16,17 * | 1-14 | INV. H01M4/485 H01M4/131 H01M4/62 H01M10/0525 H01M50/209 H01M10/627 |
| X | EP 3 220 459 B1 (TOSHIBA KK [JP]) 26 December 2018 (2018-12-26) * paragrahps [0020]-[0022], [0067]-[0068], [0072], [0080]-[0091], [0104]-[0105], [0114]-[0117], [0123]-[0124], [0130], [0139]-[0147], [0217]-[0218]; claims 1-17; figures 6-10; examples 1-37 * | 1-14 | |
| A | US 2022/302448 A1 (HOSHINA KEIGO [JP] ET AL) 22 September 2022 (2022-09-22) * paragraphs [0104] – [0105], [0122], [0217] – [0218]; claims 1-8; examples 2,16,17 * | 1-14 | **TECHNICAL FIELDS SEARCHED (IPC)** |
| A | EP 3 460 899 B1 (TOSHIBA KK [JP]) 13 May 2020 (2020-05-13) * paragraphs [0031], [0049], [0054], [0056], [0210]; claims 1,2,6; examples 1,32,33 * | 1-14 | H01M |

The present search report has been drawn up for all claims

| Place of search | Date of completion of the search | Examiner |
|---|---|---|
| Munich | 25 March 2024 | Girard, Gaëtan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

**EP 4 435 892 A1**

## ANNEX TO THE EUROPEAN SEARCH REPORT
## ON EUROPEAN PATENT APPLICATION NO.

EP 23 20 4215

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2024

| Patent document cited in search report | | | Publication date | Patent family member(s) | | | Publication date |
|---|---|---|---|---|---|---|---|
| US 2021083298 | A1 | | 18-03-2021 | CN | 112531143 | A | 19-03-2021 |
| | | | | JP | 7414439 | B2 | 16-01-2024 |
| | | | | JP | 2021048003 | A | 25-03-2021 |
| | | | | US | 2021083298 | A1 | 18-03-2021 |
| EP 3220459 | B1 | | 26-12-2018 | CN | 107204468 | A | 26-09-2017 |
| | | | | EP | 3220459 | A1 | 20-09-2017 |
| | | | | JP | 6386121 | B2 | 05-09-2018 |
| | | | | JP | 2017174810 | A | 28-09-2017 |
| | | | | KR | 20170107907 | A | 26-09-2017 |
| | | | | US | 2017271682 | A1 | 21-09-2017 |
| US 2022302448 | A1 | | 22-09-2022 | JP | 2022146667 | A | 05-10-2022 |
| | | | | US | 2022302448 | A1 | 22-09-2022 |
| EP 3460899 | B1 | | 13-05-2020 | CN | 109524726 | A | 26-03-2019 |
| | | | | EP | 3460899 | A1 | 27-03-2019 |
| | | | | JP | 6759173 | B2 | 23-09-2020 |
| | | | | JP | 2019057373 | A | 11-04-2019 |
| | | | | US | 2019089011 | A1 | 21-03-2019 |

EPO FORM P0459

For more details about this annex : see Official Journal of the European Patent Office, No. 12/82